# FASCICULE DE BREVET EUROPEEN

(11) **EP 4 543 613 B1**
(45) Date de publication et mention de la délivrance du brevet: **29.04.2026**
(21) Numéro de dépôt: 23744850.1
(22) Date de dépôt: 22.06.2023
(51) Int. Cl.: B22F 10/28, B22F 12/00, B33Y 30/00, B25J 21/02, B29C 64/153, B29C 64/30, B29C 64/314, B29C 64/321, B29C 64/371, G01N 1/00

(54) **MACHINE DE FABRICATION ADDITIVE CONFIGURÉE POUR FABRIQUER UN OBJET À PARTIR D'UNE POUDRE D'IMPRESSION**
MASCHINE ZUR GENERATIVEN FERTIGUNG ZUR HERSTELLUNG EINES OBJEKTS AUS EINEM DRUCKPULVER
ADDITIVE MANUFACTURING MACHINE CONFIGURED TO MANUFACTURE AN OBJECT FROM A PRINTING POWDER

(30) Priorité: 22.06.2022 FR 2206147
(43) Date de publication de la demande: 30.04.2025
(73) Titulaire: AddUp, 63118 Cébazat (FR)
(72) Inventeur: EL OUAZZANI TAYIBI, Ali, 63118 CÉBAZAT (FR); ANGELE, Ludovic, 63118 CÉBAZAT (FR)
(74) Mandataire: Novagraaf Group
(86) Numéro de dépôt international: PCT/FR2023/050942
(87) Numéro de publication internationale: WO 2023/247905

(56) Documents cités:
- EP-A1- 3 456 518
- DE-A1- 102012 002 955
- FR-A1- 3 058 338
- FR-A1- 3 103 125
- US-A1- 2018 001 553
- US-A1- 2019 270 250

## Description

### DOMAINE DE L'INVENTION

La présente invention concerne le domaine général des machines de fabrication additive et plus particulièrement le domaine du déchargement et du chargement de poudre dans les machines de fabrication additive.

### ETAT DE LA TECHNIQUE

La fabrication additive sélective consiste à réaliser des objets tridimensionnels par consolidation de zones sélectionnées sur des strates successives de poudre de fabrication additive (poudre métallique, poudre de céramique, etc...).

Classiquement, un dispositif de fabrication additive comprend un module de fourniture et de stockage dans lequel la poudre est préparée, et notamment tamisée, puis réservée dans une trémie tampon avant son utilisation. Le dispositif comprend également une machine de fabrication connecté au module de fourniture et de stockage. La poudre est transférée de la trémie tampon vers la machine de fabrication où elle est étalée en couche puis consolidée pour fabriquer un objet tridimensionnel.

Une fois l'objet fabriqué, de la poudre étalée mais non consolidée peut être recyclée vers la trémie tampon pour un nouvel usage ultérieur.

Lorsque la poudre de fabrication additive a été trop recyclée pour être utilisée ou lorsque l'utilisateur souhaite changer de lot de poudre, il est nécessaire de décharger la poudre contenue dans le dispositif de fabrication additive.

Pour éviter tout contact de l'opérateur avec la poudre et pour sécuriser l'opération dans le cas des poudres à faible énergie minimale d'inflammation (terme connu également sous l'abréviation EMI), on utilise classiquement un dispositif auxiliaire dédié spécifiquement au déchargement dans une atmosphère inerte, par exemple une boîte à gants.

Mais un tel dispositif auxiliaire occupe un espace important.

Le document FR 3 103 125 A1 divulgue notamment un module de fourniture de poudre de fabrication additive comprenant une trémie, un module de fabrication et un module de fourniture, un circuit d'approvisionnement du module de fourniture étant configuré pour transférer de la poudre vers la trémie et un circuit d'extraction différent du circuit d'approvisionnement étant configuré pour transférer vers un récipient de la poudre de fabrication additive depuis une entrée du module de fourniture.

### EXPOSE DE L'INVENTION

Un but de l'invention est de proposer un dispositif de fabrication additive moins encombrant que dans l'art antérieur.

Le but est atteint dans le cadre de la présente invention grâce à une machine de fabrication additive comprenant :
- une enceinte de fabrication configurée pour être fermée de manière étanche et équipée d'une boîte à gants avec des gants,
- un circuit de transport de poudre de fabrication vers un dispositif de dépôt de couches de poudre, le dispositif de dépôt de couches de poudre étant configuré pour étaler la poudre sur une zone de fabrication dans l'enceinte de fabrication, le dispositif de dépôt de couches de poudre comprenant une surface de réception de poudre et une arrivée de poudre, l'arrivée de poudre étant située au-dessus de la surface de réception de poudre,
- une source de puissance configurée pour fondre de manière sélective la poudre de fabrication étalée dans la zone de fabrication, et
- un circuit de prélèvement configuré pour prélever de la poudre depuis le circuit de transport et transporter la poudre prélevée vers une sortie du circuit de prélèvement, la sortie du circuit de prélèvement étant située au-dessus d'une zone de réception,
- la sortie du circuit de prélèvement et la zone de réception se situant dans l'enceinte de fabrication,

la zone de réception étant différente de la zone fabrication et située en regard de la sortie du circuit de prélèvement,
les gants étant configurés pour manipuler un objet situé dans l'enceinte et atteindre la zone de réception lorsque l'enceinte est fermée.

Le circuit de prélèvement définit une voie possible pour extraire de la poudre du dispositif et remplir des récipients placés dans l'enceinte de fabrication additive. Les gants de la boîte à gants de l'enceinte assurent deux fonctions : pouvoir manipuler l'objet une fois qu'il est fabriqué et pouvoir rempoter la poudre dans des récipients. Il n'est alors plus utile d'utiliser un dispositif auxiliaire dédié spécifiquement au déchargement de poudre. Dans cette situation, le problème de réduire l'encombrement du dispositif de fabrication additive est résolu. Une telle machine permet également un cout de fabrication et de maintenance plus faible.

Une telle machine est avantageusement et optionnellement complétée par les différentes caractéristiques suivantes prises seules ou en combinaison :
- le circuit de prélèvement est configuré pour prélever de la poudre depuis une partie du circuit de transport située à l'extérieur de l'enceinte ;
- la zone de réception et la sortie du circuit de prélèvement sont fixes par rapport à l'enceinte ;
- la surface de réception de poudre du dispositif de dépôt de couches de poudre est montée mobile par rapport à la zone de fabrication ;
- le circuit de prélèvement comprend un raccord configuré pour isoler par rapport à l'enceinte le circuit de prélèvement et un récipient reçu dans la zone de réception de sorte que la poudre s'écoule de manière étanche du circuit de prélèvement vers le récipient ;
- le raccord est configuré pour coulisser le long d'un conduit définissant une sortie du circuit de prélèvement et entrer en contact avec des bords du récipient reçu dans la zone de réception ;
- le circuit de prélèvement comprend un évent configuré pour équilibrer une pression à l'intérieur du circuit de prélèvement avec une pression à l'extérieur du circuit de prélèvement lorsque le raccord isole l'intérieur du circuit de prélèvement et l'intérieur du récipient par rapport à l'enceinte ;
- un capteur configuré pour détecter un niveau de remplissage en poudre d'un récipient lorsque le récipient est reçu dans la zone de réception ;
- une canne d'aspiration configurée pour aspirer de la poudre située dans la zone de réception et de la poudre située dans la zone de fabrication ;

L'invention porte également sur une installation de fabrication additive comprenant une machine telle qu'on vient de la décrire, l'installation comprenant en outre un module de fourniture de poudre configuré pour préparer, tamiser et conserver de la poudre, une sortie du module de fourniture étant connectée à une entrée du circuit de transport.

Une telle installation est avantageusement et optionnellement complétée par la caractéristiques suivante : le circuit de prélèvement comprend un raccord configuré pour isoler par rapport à l'enceinte le circuit de prélèvement et un récipient reçu dans la zone de réception de sorte que la poudre s'écoule de manière étanche du circuit de prélèvement vers le récipient le raccord est configuré pour coulisser le long d'un conduit définissant une sortie du circuit de prélèvement et entrer en contact avec des bords du récipient reçu dans la zone de réception, la canne d'aspiration étant connectée à une entrée du module de fourniture.

L'invention porte en outre sur un procédé de rempotage de poudre de fabrication dans une machine de fabrication additive comprenant une enceinte de fabrication, la machine étant configurée pour fabriquer un objet à partir de la poudre dans une zone fabrication de l'enceinte, l'enceinte étant équipée d'une boîte à gants avec des gants, les gants étant configurés pour manipuler l'objet depuis l'extérieur de l'enceinte, le procédé comprenant les étapes, l'enceinte étant fermée, consistant à :
- prélever de la poudre depuis un circuit de transport de sorte à placer la poudre prélevée dans un récipient reçu dans une zone de réception de l'enceinte, la zone de réception étant différente de la zone fabrication et
- fermer le récipient au moyen des gants depuis l'extérieur de l'enceinte, le récipient ne faisant pas partie de la machine et étant configuré pour être extrait de l'enceinte.

Un tel procédé de rempotage est avantageusement et optionnellement complété par les différentes caractéristiques suivantes prises seules ou en combinaison :
- une étape antérieure à l'étape de prélèvement de la poudre, l'étape consistant à déplacer un raccord pour isoler par rapport à l'enceinte un circuit de prélèvement de poudre et le récipient,
- une étape de positionnement d'un capteur configuré pour détecter un niveau de remplissage en poudre du récipient de sorte à définir un niveau de remplissage du récipient ;

L'invention porte enfin sur un procédé de chargement de poudre de fabrication dans une machine de fabrication additive comprenant une enceinte de fabrication, la machine étant configurée pour fabriquer un objet à partir de la poudre dans une zone fabrication de l'enceinte, l'enceinte comprenant une boite à gants avec des gants, les gants étant configurés pour manipuler l'objet depuis l'extérieur de la boîte, le procédé comprenant les étapes consistant à :
- insérer dans l'enceinte un récipient rempli de poudre et fermé hermétiquement, le récipient étant reçu dans une zone de réception, la zone de réception étant différente de la zone fabrication,
- fermer l'enceinte de manière étanche,
- l'enceinte étant fermée, ouvrir le récipient au moyen des gants depuis l'extérieur de l'enceinte, et
- l'enceinte étant fermée, aspirer la poudre contenue dans le récipient de sorte à la transférer vers un module de fourniture de poudre configuré pour préparer, tamiser et conserver de la poudre.

### DESCRIPTION DES FIGURES

D'autres caractéristiques et avantages de l'invention ressortiront encore de la description qui suit, laquelle est purement illustrative et non limitative, et doit être lue en regard des dessins annexés sur lesquels :

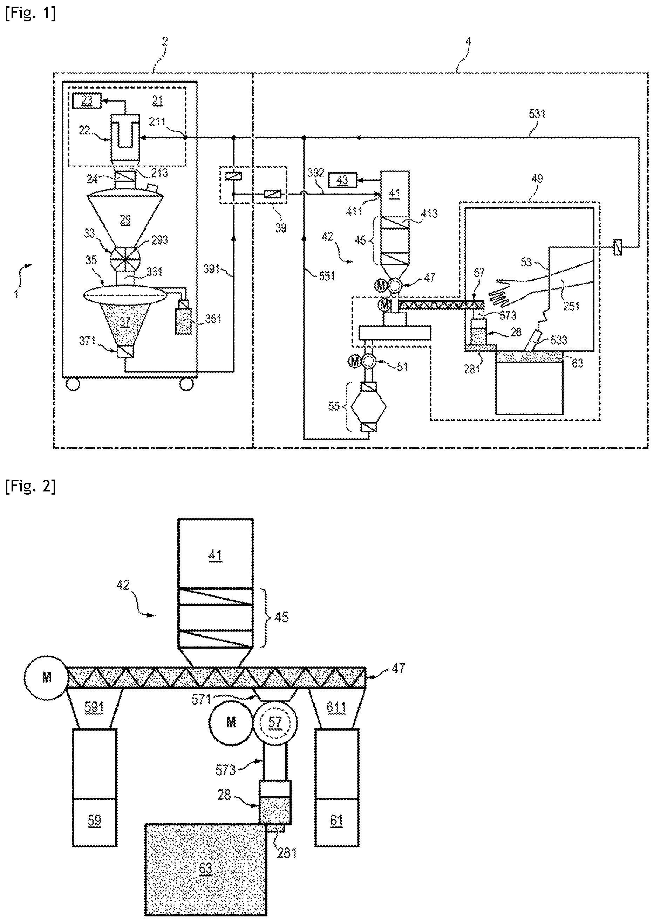

[Fig. 1] la figure 1 est une représentation schématique d'un dispositif de fabrication additive selon un mode de réalisation de l'invention.
   [Fig. 2]
   [Fig. 3]
   [Fig. 4]
   [Fig. 5]
   les figures 2 à 5 sont des représentations schématiques de détails du dispositif de fabrication additive illustré en figure 1.
[Fig. 6] la figure 6 est une représentation schématique d'un procédé de chargement de poudre de fabrication additive selon un mode de réalisation de l'invention.
[Fig. 7] la figure 7 est une représentation schématique d'un procédé de rempotage de poudre de fabrication additive selon un mode de réalisation de l'invention.

### DESCRIPTION DETAILLEE DE L'INVENTION

En rapport avec les figures 1 à 5, il est présenté un dispositif de fabrication additive 1 comprenant une machine de fabrication 4 et un module de fourniture de poudre 2.

### Machine de fabrication

La machine de fabrication 4 est configurée pour mettre en œuvre une fabrication additive d'objets à partir d'une poudre d'impression ou poudre de fabrication.

Cette fabrication consiste à réaliser des objets tridimensionnels par consolidation de zones sélectionnées sur des strates successives de matériau pulvérulent (poudre métallique, poudre de céramique, etc...). Les zones consolidées correspondent à des sections successives de l'objet tridimensionnel. La consolidation se fait par exemple couche par couche, par une fusion sélective totale ou partielle réalisée avec une source de puissance.

On peut notamment employer comme source de puissance pour réaliser la fusion des couches de poudre des sources laser de forte puissance ou des sources de faisceau d'électrons.

La machine de fabrication comprend une enceinte 49 dans laquelle se produit la fabrication. Plus précisément, la fabrication a lieu dans une zone de fabrication 63 (ou zone d'impression) située dans l'enceinte 49.

La poudre se situe initialement dans une partie extérieure à l'enceinte 49, et de préférence au-dessus de la zone d'impression 63.

Par exemple la machine de fabrication peut comprendre, de préférence dans sa partie supérieure, un système d'aspiration 41 relié à un circuit d'évacuation de gaz 43. Le système d'aspiration 41 présente une entrée 411 connectée au module de fourniture de poudre 2. Le système d'aspiration 41 est adapté pour générer une force d'aspiration au niveau de l'entrée 411 dirigée vers l'intérieur du système d'aspiration 41. L'entrée 411 du système d'aspiration 41 est connectée à un conduit de fabrication 392 qui peut relier la machine de fabrication à la sortie du module de préparation 2. Le circuit d'évacuation de gaz 43 peut comprendre une pompe à vide pour générer la force d'aspiration. Le système d'aspiration 41 peut comprendre un filtre à poudre pour que la poudre ne passe pas dans le circuit d'évacuation de gaz 43. Le système d'aspiration 41 comprend un dispositif qui permet de séparer la poudre du gaz comme par exemple un cyclone. D'autres dispositifs existent pour séparer la poudre au gaz comme un caisson de filtration comprenant des filtres, un cyclofiltre ou une boîte de décharge. Le système d'aspiration 41 est adapté pour recevoir de la poudre de fabrication additive depuis l'entrée 411, et la conserver. La poudre conservée se situe au bas du deuxième système d'aspiration 41 et peut être extraite par la sortie 413.

En variante, la machine de fabrication peut comprendre un réservoir fixe de poudre, par exemple un réservoir tampon, en complément ou en remplacement du système d'aspiration 41.

Le réservoir fixe de poudre quand il est présent ou le système d'aspiration 41 présentent une sortie 413 située dans leur partie basse.

### Circuit de transport

La machine de fabrication 4 comprend un circuit de transport 42 configuré pour acheminer de la poudre du système d'aspiration 41 ou du réservoir fixe vers un dispositif de dépôt de couches de poudre.

Le circuit de transport 42 peut comprendre un sas 45 relié à la sortie 413 du système d'aspiration 41 ou du réservoir fixe. Le sas 45 permet de transmettre de la poudre sans que l'enceinte 49 ne soit jamais en communication avec le réservoir fixe ou le système d'aspiration 41. Cela permet d'éviter de perturber l'inertage et la pression dans l'enceinte d'impression.

Selon un premier mode de réalisation illustré en figure 1, le circuit de transport 42 comprend une vis divergente 47 en aval du sas 45 le cas échéant.

Dans une première variante préférée, le dispositif de dépôt de couches comprend au moins une arrivée fixe de poudre et au moins une surface mobile de réception de poudre se déplaçant sous cette arrivée fixe de poudre.

Le dispositif de dépôt de couches de poudre permet aussi d'étaler la poudre depuis la surface mobile de réception de poudre vers la zone de fabrication 63 de l'objet dans l'enceinte 49.

C'est dans la zone de fabrication 63 que les objets sont réalisés par une consolidation sélective de la poudre obtenue avec la source de puissance.

Dans cette première variante, le dispositif de dépôt de couches comprend de préférence une trémie gauche 591 et une trémie droite 611. La vis divergente 47 est configurée pour remplir la trémie gauche 591 et la trémie droite 611. La trémie gauche est située d'un premier côté de la zone de fabrication 63, et la trémie droite est située d'un deuxième côté de la zone de fabrication 63, le deuxième côté étant opposé au premier côté par rapport à un axe horizontal A traversant la zone de fabrication 63.

Le dispositif de dépôt de couches comprend en correspondance avec chaque trémie 591 et 611 un doseur qui est alimenté par la trémie. En dessous de chaque doseur défile une surface mobile de réception de poudre du dispositif de dépôt de couches.

Chaque doseur forme une arrivée fixe de poudre telle que décrite précédemment.

Chaque tiroir 59, 61 définit une surface mobile de réception de poudre telle que décrite précédemment.

Chaque tiroir 59, 61 est configuré pour se déplacer selon un mouvement de translation parallèle à l'axe horizontal A. Lorsqu'un doseur délivre un débit de poudre vers le tiroir qui se déplace sous ce doseur, un cordon continu de poudre se forme sur la surface supérieure de ce tiroir. Simultanément à son déplacement sous un doseur, chaque tiroir rentre dans l'enceinte 49 de sorte à placer le cordon de poudre qu'il transporte en regard de la zone de fabrication 63.

Dans une seconde variante, un dispositif de dépôt de couches de poudre peut comprendre au moins une arrivée de poudre mobile dans l'enceinte 49 et au moins une surface de réception de poudre fixe dans l'enceinte 49.

Dans l'une ou l'autre de ces variantes, le dispositif de dépôt de couches de poudre comprend un rouleau ou une raclette, l'un comme l'autre configuré pour étaler la poudre placée sur la surface de réception de poudre sur la zone de fabrication 63.

### Enceinte

Les objets tridimensionnels sont fabriqués dans l'enceinte 49. L'enceinte 49 constitue une enceinte de fabrication. L'enceinte 49 est propre à être fermée de manière étanche. L'enceinte 49 comprend une porte sur un de ses flancs qui peut être fermée de manière étanche ou alternativement être ouverte pour donner accès à un opérateur à l'intérieur de l'enceinte. L'opérateur peut notamment extraire l'objet fabriqué par fabrication additive dans l'enceinte par la porte.

L'enceinte 49 comprend de préférence une boite à gants. La boite à gants est intégrée à une paroi et des gants 251 sont fixés de manière étanche à cette paroi. Les gants 251 sont souples de sorte qu'un opérateur peut manipuler des pièces situées à l'intérieur de l'enceinte 49 lorsque celle-ci est fermée. En particulier, les gants 251 sont placés et configurés de sorte qu'un opérateur peut accéder à une zone de fabrication 63 de l'objet et manipuler l'objet fabriqué ou en cours de fabrication.

### Circuit de prélèvement

La machine de fabrication 4 comprend un circuit de prélèvement 57 configuré pour prélever de la poudre depuis le circuit de transport 42.

Le circuit de prélèvement 57 constitue un circuit supplémentaire par rapport au circuit de transport.

Le circuit de transport et le circuit de prélèvement 57 comprennent chacun une ouverture en regard l'une de l'autre de sorte que de la poudre peut être transférée du circuit de transport vers le circuit de prélèvement 57. Une canalisation peut joindre les deux ouvertures pour guider la poudre du circuit de transport vers le circuit de prélèvement 57.

L'ouverture dans le circuit de transport peut être contrôlée pour être fermée ou ouverte pour empêcher ou permettre le transfert de poudre du circuit de transport vers le circuit de prélèvement 57.

Le circuit de prélèvement 57 est configuré pour déplacer de la poudre depuis l'ouverture du circuit de prélèvement 57 jusqu'à une sortie du circuit de prélèvement 573, dite sortie de déchargement, située dans l'enceinte 49. L'ouverture du circuit de prélèvement constitue ainsi l'entrée du circuit de prélèvement.

L'ouverture du circuit de prélèvement peut être placée à l'extérieur de l'enceinte 49 de sorte que le circuit de prélèvement 57 est configuré pour prélever de la poudre depuis une partie du circuit de transport 42 située à l'extérieur de l'enceinte 49.

Dans le cas où une partie du circuit de transport 42 se situe dans l'enceinte 49, l'ouverture du circuit de prélèvement peut être placée à l'intérieur de l'enceinte 49.

Le transfert de poudre du circuit de transport vers le circuit de prélèvement 57peut être effectué dans un plan vertical ou dans un plan présentant une pente non nulle par rapport au plan horizontal.

Le circuit de prélèvement 57 pour assurer le transport de la poudre peut comprendre une vis divergente, une monovis ou encore une goulotte vibrante.

De plus, le circuit de prélèvement 57 peut comprendre un doseur de poudre pour contrôler la quantité ou le débit de poudre qui est transportée dans le circuit de prélèvement et délivrée via la sortie de déchargement 573.

La sortie de déchargement 573 du circuit de prélèvement 57 est située à l'intérieur de l'enceinte 49. Plus précisément, la sortie de déchargement 573 du circuit de prélèvement est située au-dessus d'une zone de réception 281 située dans l'enceinte 49. La zone de réception 281 est configurée pour recevoir un récipient 28 de sorte que le bord supérieur du récipient se situe en dessous de la sortie de déchargement 573 du circuit de prélèvement. Le récipient 28 ne fait pas partie de la machine et est configuré pour être introduit ou extrait de l'enceinte 49 par un opérateur. Le récipient 28 est destiné à contenir de la poudre d'impression. La zone de réception 281 est également configurée pour être accessible par les gants. Autrement dit, un opérateur peut déplacer, ouvrir et/ou fermer un récipient situé dans la zone de réception 281.

De manière avantageuse, la zone de réception 281 et la sortie du circuit de prélèvement 57 sont fixes par rapport à l'enceinte 49.

La machine de fabrication 4 peut comprendre en option un capteur 283 configuré pour détecter un niveau de remplissage en poudre du récipient 28 lorsque le récipient 28 est reçu dans la zone de réception 281. Le capteur se situe dans la zone de réception 281 ou proche de cette zone. Le capteur est mobile de sorte qu'un opérateur peut ajuster la position du capteur. En ajustant la position du capteur 283 plus ou moins élevée en regard du récipient 28, l'opérateur peut définir le niveau de remplissage souhaité.

Le capteur 283 peut être de type capacitif ou inductif magnétique, en particulier lorsque la poudre est métallique. D'autres types de capteur peuvent être utilisés pour produire un signal dont la valeur change lorsque le niveau de poudre dans le pot atteint le niveau du détecteur.

Lorsque le circuit de prélèvement 57 comprend un doseur de poudre et un capteur, ils peuvent être reliés l'un à l'autre notamment pour que le capteur envoie un signal de « récipient rempli » au doseur qui arrête alors le transport de poudre dans le circuit de prélèvement.

La zone de réception 281 peut avantageusement être directement adjacente à la zone de fabrication 63. De cette manière, l'opérateur peut, grâce aux gants 251 configurés pour accéder à la zone de fabrication récupérer la pièce fabriquée ou manipuler une canne d'aspiration 53, accéder également à la zone de réception 281. Les gants 251 sont donc configurés pour permettre la manipulation d'objet dans la zone de fabrication et l'accès à la zone de réception 281.

### Raccord d'étanchéité

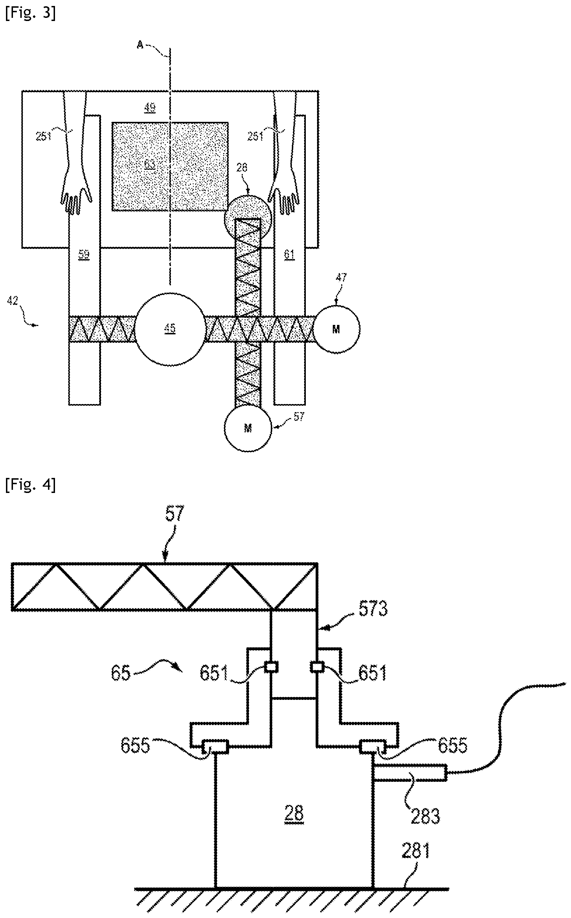

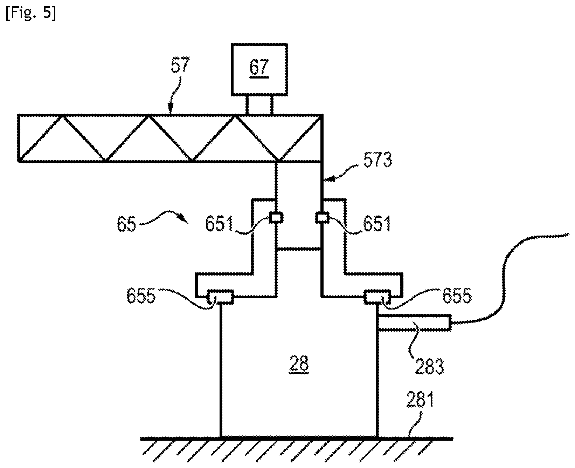

En option et en référence aux figures 4 et 5, le circuit de prélèvement 57 peut comprendre un raccord 65 configuré pour isoler par rapport à l'enceinte 49 le circuit de prélèvement 57 et le récipient 28 reçu dans la zone de réception de sorte que la poudre s'écoule de manière étanche du circuit de prélèvement vers le récipient.

En présence d'un récipient 28 situé en dessous de la sortie de déchargement 573, le raccord 65 peut être amené simultanément en contact avec la sortie de déchargement 573 et le récipient 28. De cette manière le circuit de prélèvement de poudre est relié de manière étanche à l'intérieur du récipient. La poudre s'écoule ainsi du circuit de prélèvement dans le récipient sans générer un nuage de poudre dans l'enceinte d'impression. On évite ainsi une pollution de l'enceinte et notamment des blocs optiques qu'elle contient.

Plus précisément, le raccord 65 peut être configuré pour coulisser le long d'un conduit définissant la sortie de déchargement et entrer en contact avec des bords du récipient 28 reçu dans la zone de réception 281. Le conduit peut être en particulier orienté selon une direction verticale de sorte que le joint 65 coulisse selon la direction verticale. En présence d'un récipient 28 situé en dessous de la sortie de déchargement 573, le raccord 65 peut :
- être placé en configuration fermée en étant descendu le long du conduit jusqu'à entrer en contact avec le bord supérieur du récipient 28, ou
- être placé en configuration ouverte en étant remonté le long du conduit jusqu'à ne plus être en contact avec le bord supérieur du récipient 28.

En maintenant une pression d'appui suffisante du raccord contre le bord supérieur du récipient en configuration de fermeture, on réalise l'étanchéité nécessaire.

Un joint déformable 651 peut être prévu entre le raccord 65 et le conduit définissant la sortie de déchargement.

Un joint déformable 655 peut être prévu entre le raccord 65 et le bord supérieur du récipient 28.

Dans une variante et en référence à la figure 5, le circuit de prélèvement comprend en outre un évent 67 configuré pour équilibrer une pression à l'intérieur du circuit de prélèvement avec une pression à l'extérieur du circuit de prélèvement lorsque le raccord 65 isole l'intérieur du circuit de prélèvement et l'intérieur du récipient.

L'évent 67 est situé en amont de la sortie de déchargement 573. L'évent comprend notamment un filtre disposé entre le volume intérieur du circuit de prélèvement et l'enceinte 49. L'évent 67 permet d'éviter qu'au retrait du raccord 65, un nuage de poudre ne se forme au niveau du récipient 28.

### Système de récupération de poudre

En option, la machine de fabrication 4 peut comprendre un système de récupération de la poudre étalée et non consolidée en fin de fabrication.

Le système de récupération peut comprendre une canne d'aspiration 53 configurée pour aspirer de la poudre.

La canne d'aspiration 53 comprend un bec d'aspiration 533 qui constitue l'entrée de la canne d'aspiration. Les gants 251 sont configurés dans cette option de sorte qu'un opérateur peut manipuler la canne d'aspiration 53. L'opérateur peut ainsi placer le bec d'aspiration 533 en différents endroits de l'enceinte 49 et aspirer la poudre qui se trouve en ces différents endroits.

La poudre est aspirée au niveau du bec 533 et transmise vers l'autre extrémité de la canne qui constitue la sortie de la canne d'aspiration 53.

Le dispositif de fabrication 1 peut comprendre un premier conduit de récupération 531 connecté à la sortie de la canne d'aspiration 53.

En référence à la figure 1, le système de récupération peut également comprendre un sas excédant 55 adapté pour récupérer l'excédent de poudre déposé sur la zone de fabrication 63.

Le dispositif de fabrication 1 peut comprendre un deuxième conduit de récupération 551 connecté au sas excédant 55.

Le sas excédant 55 permet de transmettre de la poudre sans que la chambre de l'imprimante ne soit jamais en communication avec le deuxième conduit de récupération 551 pour éviter de perturber l'enceinte d'impression vis-à-vis de l'inertage et de la pression.

L'invention couvre également un dispositif de fabrication additive comprenant une machine de fabrication telle qu'on vient de la présenter ainsi qu'un module de fourniture de poudre configuré pour préparer, tamiser et conserver de la poudre, une sortie du module de fourniture étant connectée à une entrée du circuit de transport

### Module de fourniture

Le module de fourniture 2 comprend dans sa partie supérieure un deuxième système d'aspiration 21 relié à un premier circuit d'évacuation de gaz 23. Le deuxième système d'aspiration 21 est distinct du premier système d'aspiration 41 mentionné précédemment. Le deuxième système d'aspiration 21 présente une entrée 211 et une sortie 213 située au bas du deuxième système d'aspiration 21. Le deuxième système d'aspiration 21 est adapté pour générer une force d'aspiration au niveau de l'entrée 211 dirigée vers l'intérieur du deuxième système d'aspiration 21. Le premier circuit d'évacuation de gaz 23 peut comprendre une pompe à vide pour générer la force d'aspiration. Le deuxième système d'aspiration 21 est adapté pour recevoir de la poudre de fabrication additive depuis l'entrée 211 et la conserver. La poudre conservée se situe au bas du deuxième système d'aspiration 21 et peut être extraite par la sortie 213.Le deuxième système d'aspiration 21 peut comprendre un filtre à poudre pour que la poudre ne passe pas dans le premier circuit d'évacuation 23. Le système d'aspiration 21 comprend un dispositif qui permet de séparer la poudre du gaz comme par exemple un cyclofiltre 22. D'autres dispositifs existent pour séparer la poudre au gaz comme un caisson de filtration comprenant des filtres, un cyclone ou une boîte de décharge.

Le module de fourniture 2 comprend une trémie principale 29 qui se situe en dessous du deuxième système d'aspiration 21. La trémie principale 29 est un contenant qui permet de conserver de la poudre de fabrication additive.

Le module de fourniture 2 comprend une vanne 24 située entre le deuxième système d'aspiration 21 et la trémie principale 29. La vanne 24 en configuration ouverte permet le passage de poudre et la vanne 24 en configuration fermée permet de séparer de manière étanche le deuxième système d'aspiration 21 de la trémie principale 29.

La trémie principale 29 présente un volume de forme tronconique adapté pour conserver une importante quantité de poudre de fabrication. La trémie principale 29 est orientée de sorte que l'axe de la forme tronconique est vertical et que le volume de la forme tronconique présente une section horizontale plus faible en bas de la trémie. La trémie principale 29 présente une sortie 293 située en bas de la trémie principale.

Le module de fourniture 2 comprend un doseur 33, situé en dessous de la trémie principale 29. Le doseur 33 permet d'ajuster le débit de poudre envoyé en aval. Le doseur 33 est relié à la sortie 293 de la trémie principale. Le doseur 33 comporte une sortie 331 située en bas du doseur 33.

Le module de fourniture 2 comprend un tamiseur 35, situé en dessous du doseur 33. Le tamiseur 35 est relié à la sortie 331 du doseur 33.

Le doseur 33 permet d'ajuster le débit de poudre envoyé au tamiseur 35, afin ne pas dégrader un tamis compris à l'intérieur du tamiseur 35.

Le tamiseur permet de filtrer les amas agglomérés de poudre et de les isoler du reste de la poudre au sein d'un réceptacle 351.

Le module de fourniture 2 comprend un réservoir 37 situé en dessous du tamiseur 35. Le réservoir 37 peut être une trémie présentant un volume de forme tronconique adapté pour conserver une importante quantité de poudre de fabrication. Cette trémie peut être orientée de sorte que l'axe de la forme tronconique est vertical et que le volume de la forme tronconique présente une section horizontale plus faible en bas de la trémie. Le réservoir 37 présente une sortie 371 située en bas du réservoir.

La sortie 371 du réservoir est reliée à un circuit retour 391. Le circuit retour 391 connecte la sortie 371 du réservoir 37 et l'entrée 211 du système d'aspiration 21. Le deuxième système d'aspiration 21 peut aspirer la poudre du réservoir 37 vers le deuxième système d'aspiration 21 à travers le circuit retour 391.

La sortie 371 du réservoir est également reliée à un conduit de fabrication 392. Le conduit de fabrication 392 connecte la sortie 371 du réservoir 37 et la machine de fabrication 4, de sorte que de la poudre contenue dans le réservoir 37 peut être transférée vers la machine de fabrication 4.

Le tamiseur 35 est situé juste au-dessus du réservoir 37 de sorte que la poudre contenue dans le réservoir 37 et transmise à la machine de fabrication 4 est tamisée le plus tard possible avant son envoi vers la machine de fabrication 4.

Le réservoir 37 peut présenter un volume plus faible que la trémie principale 29. Le rôle du réservoir 37 est de conserver la poudre juste avant son transport soit vers la machine de fabrication 4 soit vers le deuxième système d'aspiration 21. Le réservoir 37 peut être qualifiée de trémie tampon.

La trémie principale 29 est adaptée pour contenir une part importante de la poudre de fabrication nécessaire à la fabrication additive d'un ou plusieurs objets tridimensionnels. La poudre contenue dans la trémie principale 29 est destinée à être transmise à la machine de fabrication 4. A cet effet, la trémie principale 29 est adaptée pour être connectée à la machine de fabrication 4 configurée pour fabriquer additivement un objet sur la base de la poudre se trouvant dans la trémie principale 29. La connexion de la trémie principale 29 à la machine de fabrication est réalisée par la circulation de poudre passant par le doseur 33, le tamiseur 35, le réservoir ou trémie tampon 37 et enfin le conduit de fabrication 392.

Le module de fourniture 2 comprend un contrôleur qui permet d'aiguiller la poudre depuis la sortie 371 vers le circuit retour 391 ou vers le conduit de fabrication 392.

Le module de fourniture 2 comprend un système de mise en circulation comprenant le système d'aspiration 21.

Le deuxième système d'aspiration 21 peut aspirer la poudre du réservoir 37 vers le deuxième système d'aspiration 21 à travers le circuit retour 391.

Le premier conduit de récupération 531 connecte la sortie de la canne d'aspiration 53 et l'entrée 211 du deuxième système d'aspiration 21.

Le deuxième conduit de récupération 551 connecte le sas excédant 55 et l'entrée 211 du deuxième système d'aspiration 21.

Le dispositif de fabrication 1 peut également comprendre un contrôleur adapté pour faire circuler la poudre de manière contrôlée depuis le système de récupération vers un système d'aspiration du module de fourniture. Un tel contrôleur permet d'aiguiller la poudre depuis le premier conduit de récupération 531 ou depuis le deuxième conduit de récupération 551 vers le module de fourniture.

L'entrée 211 peut à ce titre être qualifiée d'entrée du module de fourniture 2 adaptée pour être connectée à la machine de fabrication 4 et recevoir de la poudre se trouvant dans la machine de fabrication 4.

Il est à noter que le dispositif de fabrication 1 comprend suffisamment de vannes au niveau des croisements de conduits 391, 392, 531 et 551 pour permettre ou empêcher les circulations de poudre mentionnées dans la description.

### Procédé de chargement

L'invention porte sur un procédé de chargement de poudre de fabrication dans une enceinte de fabrication 49 configurée pour fabriquer un objet à partir de la poudre dans une zone fabrication 63 de l'enceinte 49, l'enceinte 49 étant équipée d'une boite à gants avec des gants 251 configurés pour manipuler l'objet depuis l'extérieur de l'enceinte, le procédé comprenant les étapes consistant à:
- insérer dans l'enceinte 49 un récipient 28 rempli de poudre et fermé hermétiquement, le récipient 28 étant reçu dans une zone de réception 281, la zone de réception (281) étant différente de la zone fabrication 63,
- fermer l'enceinte de manière étanche,
- l'enceinte 49 étant fermée, ouvrir le récipient 28 au moyen des gants 251 depuis l'extérieur de l'enceinte 49 et
- l'enceinte 49 étant fermée, aspirer la poudre contenue dans le récipient 28 de sort à la transférer vers un module de fourniture 2 de poudre configuré pour préparer, tamiser et conserver de la poudre.

Il est à noter que la machine de fabrication additive a été décrite précédemment et comprend le circuit de transport 42 de poudre de fabrication vers un dispositif de dépôt de couches de poudre, le dispositif de dépôt de couches de poudre étant configuré pour étaler la poudre sur la zone de fabrication 63, le dispositif de dépôt de couches de poudre comprenant une surface de réception de poudre et une arrivée de poudre, l'arrivée de poudre étant située au-dessus de la surface de réception de poudre.

Dans ce procédé, l'enceinte 49 est configurée pour fabriquer à l'intérieur de l'enceinte 49 un objet à partir de la poudre, les gants étant configurés pour manipuler l'objet à l'intérieur de l'enceinte 49 depuis l'extérieur de l'enceinte 49, le module de fourniture étant configuré pour préparer, tamiser et conserver de la poudre.

De cette manière, il est possible de charger de la poudre dans le module de fourniture par l'enceinte dans laquelle a lieu la fabrication. Il n'est donc plus nécessaire de disposer d'une enceinte extérieure spécifiquement dédiée au chargement du module de fourniture : l'encombrement de l'ensemble du dispositif est ainsi réduit.

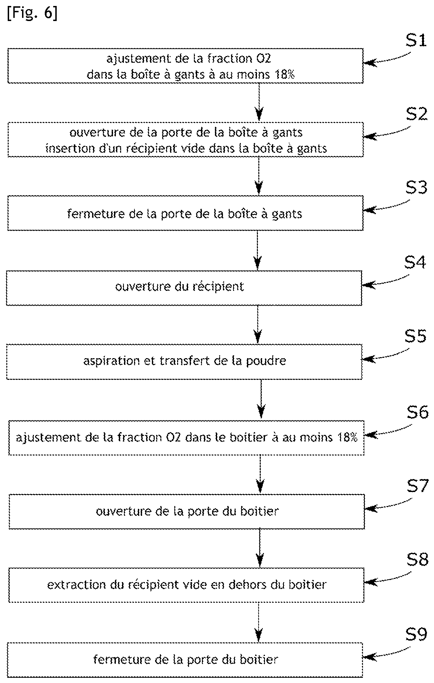

Le dispositif 1 tel que décrit précédemment comprenant la machine de fabrication 4 et le module de fourniture 2, le premier conduit de récupération 531 connectant la sortie de la canne d'aspiration 53 et l'entrée 211 du deuxième système d'aspiration 21, permet le chargement de la poudre de fabrication selon ces étapes, et plus largement selon les étapes décrites ci-après, reprises dans la figure 6.

Initialement, l'enceinte 49 est fermée hermétiquement et ne contient aucun récipient.

Au cours d'une première étape S1, la fraction en oxygène à l'intérieur de l'enceinte 49 est ajustée pour atteindre au moins 18%. Un capteur d'oxygène peut notamment acquérir une mesure de la fraction en oxygène à cet effet.

Au cours d'une deuxième étape S2, la porte de l'enceinte 49 est ouverte et un récipient 28 de poudre est inséré ou plusieurs récipients de poudre y sont insérés, par exemple ils sont placés sur la zone de réception 281.

Au cours d'une troisième étape S3, l'enceinte 49 est fermée de manière étanche et la fraction en oxygène y est ajustée à au plus 2%.

Au cours d'une quatrième étape S4, l'opérateur manipule le récipient 28 et l'ouvre au moyen des gants 251 depuis l'extérieur de la boîte 49.

Au cours d'une cinquième étape S5, l'opérateur manipule une canne d'aspiration 53 au moyen de gants 251 depuis l'extérieur de la boîte 49 pour aspirer la poudre contenue dans le récipient, la poudre étant ensuite transférée vers le module de fourniture 2.

Si plusieurs récipients de poudre ont été insérés, les étapes S4 à S5 sont répétées jusqu'à ce que tous les pots insérés soient vides.

Au cours de la sixième étape S6, la fraction en oxygène à l'intérieur du boîtier est ajustée pour atteindre au moins 18%.

Au cours d'une septième étape S7, la porte de l'enceinte 49 est ouverte.

Au cours d'une huitième étape S8, le récipient rempli et fermé ou les récipients remplis et fermés sont extraits de l'enceinte 49.

Au cours d'une neuvième étape S9, la porte de l'enceinte 49 est fermée hermétiquement.

Une fois parvenue au module de fourniture 2, la poudre peut être tamisée et conservée dans le réservoir 37. La poudre contenue dans la trémie principale 29 est transmise vers le tamiseur 35 à travers le doseur 33. Le tamiseur 35 tamise la poudre et extrait les amas de poudre et les agrégats de poudre trop importants. Ces amas sont transmis vers le réceptacle 351 et sont conservés dans le réceptacle. La poudre tamisée traverse le tamiseur 35 et passe dans le réservoir 37 dans laquelle elle est conservée avant utilisation.

### Procédé de rempotage

L'invention porte sur un procédé de rempotage de poudre de fabrication dans une machine de fabrication additive comprenant une enceinte de fabrication 49, la machine étant configurée pour fabriquer un objet à partir de la poudre dans une zone fabrication 63 de l'enceinte 49, l'enceinte 49 étant équipée d'une boîte à gants avec des gants 251, les gants 251 étant configurés pour manipuler l'objet depuis l'extérieur de l'enceinte 49, le procédé comprenant les étapes, l'enceinte 49étant fermée, consistant à :
- prélever de la poudre depuis un circuit de transport 42 de sorte à placer la poudre prélevée dans un récipient 28 reçu dans une zone de réception 281 de l'enceinte 49, la zone de réception 281 étant différente de la zone fabrication 63, et
- fermer le récipient 28 au moyen des gants 251 depuis l'extérieur de l'enceinte 49), le récipient 28 ne faisant pas partie de la machine et étant configuré pour être extrait de l'enceinte 49.

Il est à noter que la machine de fabrication additive a été décrite précédemment et comprend le circuit de transport 42 de poudre de fabrication vers un dispositif de dépôt de couches de poudre, le dispositif de dépôt de couches de poudre étant configuré pour étaler la poudre sur la zone de fabrication 63, le dispositif de dépôt de couches de poudre comprenant une surface de réception de poudre et une arrivée de poudre, l'arrivée de poudre étant située au-dessus de la surface de réception de poudre.

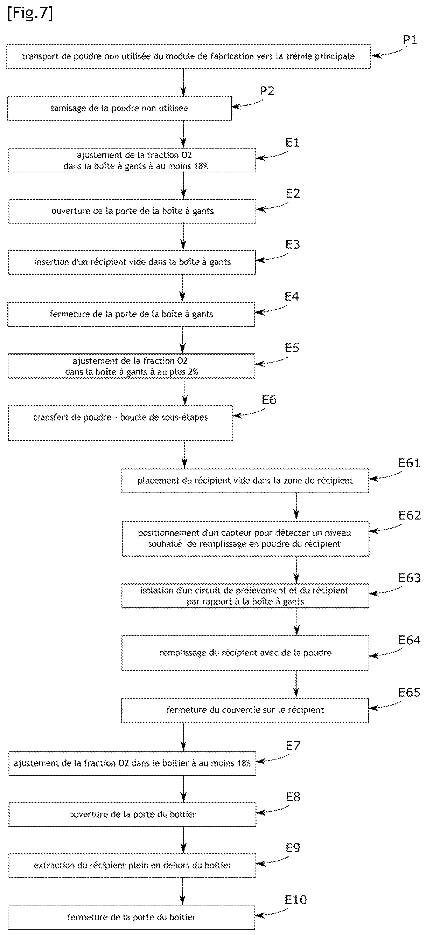

La machine de fabrication 4 permet ainsi le rempotage de la poudre de fabrication non utilisée selon ces étapes, et plus largement selon les étapes décrites ci-après, reprises dans la figure 7.

La poudre non utilisée peut se situer initialement dans le réservoir 37 du module de fourniture 2 et être acheminée vers la machine de fabrication 4. Initialement, l'enceinte 49 est fermée hermétiquement et ne contient aucun récipient.

Au cours d'une première étape E1, la fraction en oxygène à l'intérieur de l'enceinte 49 est ajustée pour atteindre au moins 18%.

Au cours d'une deuxième étape E2, la porte de de l'enceinte 49 est ouverte.

Au cours d'une troisième étape E3, un récipient vide est inséré ou plusieurs récipients vides sont insérés dans l'enceinte 49. Les récipients peuvent être placés dans la zone de réception 281. Les couvercles des récipients sont également insérés. Les récipients peuvent être entrés ouverts. Les récipients peuvent être entrés fermés en particulier s'ils contiennent une atmosphère inertée, c'est-à-dire avec une composition gazeuse d'au plus 2% d'oxygène et au moins 98% de gaz inerte.

Au cours d'une quatrième étape E4, la porte de l'enceinte 49 est fermée de manière hermétique.

Au cours d'une cinquième étape E5, la fraction en oxygène dans l'enceinte 49 est ajustée à au plus 2%.

Au cours d'une sixième étape E6 une boucle de sous étapes est réalisée.

Au cours d'une première sous-étape E61, un récipient vide est placé dans la zone de réception 281 sous la sortie de déchargement 573.

Au cours d'une deuxième sous-étape E62, l'opérateur positionne un capteur 283 configuré pour détecter un niveau de remplissage en poudre du récipient de sorte à définir un niveau de remplissage souhaité du récipient.

Au cours d'une troisième sous-étape E63, le raccord 65 est déplacé pour isoler par rapport à une enceinte de la boîte 49 le circuit de prélèvement 57 et le récipient 28 reçu dans la zone de réception 281.

Au cours d'une quatrième sous-étape E64, le circuit de prélèvement est actionné pour prélever de la poudre au-dessus d'une zone de fabrication et débiter ainsi une quantité de poudre vers la sortie du circuit de prélèvement. Cette quantité est inférieure ou égale à une contenance maximale du récipient. Un doseur du circuit de prélèvement peut recevoir un signal du capteur pour mettre fin au remplissage lorsque le capteur émet un signal de « récipient rempli ».

Au cours d'une cinquième sous-étape E65, le récipient et son couvercle sont manipulés à l'aide des gants 251 de sorte à fermer le récipient avec le couvercle. L'opérateur ferme le récipient avec le couvercle.

La boucle de sous-étapes est reprise tant qu'il reste un récipient vide et de la poudre à rempoter. Autrement dit, lorsqu'il n'y a plus de récipient vide ou de poudre à rempoter, la boucle de sous-étapes est interrompue. Dans ce cas, une septième étape E7 est réalisée.

Au cours de la septième étape E7, la fraction en oxygène à l'intérieur du boîtier est ajustée pour atteindre au moins 18%.

Au cours d'une huitième étape E8, la porte de l'enceinte 49 est ouverte.

Au cours d'une neuvième étape E9, le récipient rempli et fermé ou les récipients remplis et fermés sont extraits de l'enceinte 49.

Au cours d'une dixième étape E10, la porte de l'enceinte 49 est fermée hermétiquement.

Il est à noter que les sous-étapes E62 et E63 sont optionnelles et sont avantageusement réalisées lorsque la machine de fabrication comprend respectivement un capteur 283 et un raccord 65.

Il est à noter également que cette poudre peut être retamisée avant rempotage. Quelle que soit la position de la poudre à rempoter dans le dispositif, il est possible de la transporter la poudre via le deuxième système d'aspiration 21 vers la trémie principale 29 (étape P1). Cette poudre non utilisée peut alors être retamisée par le tamiseur 35. Par la suite la poudre non utilisée et retamisée est renvoyée vers la machine de fabrication et un récipient placé dans la zone de réception. Il est ainsi possible de reconditionner de la poudre sous atmosphère protectrice par quantités transportables par un opérateur avant de la conserver pour une éventuelle réutilisation ultérieure.

## Revendications

1. Machine de fabrication additive (4) comprenant :
- une enceinte de fabrication (49) configurée pour être fermée de manière étanche et équipée d'une boîte à gants avec des gants (251),
- un circuit de transport (42) de poudre de fabrication vers un dispositif de dépôt de couches de poudre, le dispositif de dépôt de couches de poudre étant configuré pour étaler la poudre sur une zone de fabrication (63) dans l'enceinte de fabrication (49), le dispositif de dépôt de couches de poudre comprenant une surface de réception de poudre et une arrivée de poudre, l'arrivée de poudre étant située au-dessus de la surface de réception de poudre,
- une source de puissance configurée pour fondre de manière sélective la poudre de fabrication étalée dans la zone de fabrication (63), et
- un circuit de prélèvement (57) configuré pour prélever de la poudre depuis le circuit de transport (42) et transporter la poudre prélevée vers une sortie du circuit de prélèvement (57), la sortie du circuit de prélèvement étant située au-dessus d'une zone de réception (281),
- la sortie du circuit de prélèvement (57) et la zone de réception (281) se situant dans l'enceinte de fabrication,
la zone de réception (281) étant différente de la zone fabrication (63) et située en regard de la sortie du circuit de prélèvement (57),
les gants (251) étant configurés pour manipuler un objet situé dans l'enceinte (49) et atteindre la zone de réception (281) lorsque l'enceinte est fermée.

2. Machine selon la revendication 1 dans laquelle le circuit de prélèvement (57) est configuré pour prélever de la poudre depuis une partie du circuit de transport (42) située à l'extérieur de l'enceinte (49).

3. Machine selon l'une quelconque des revendications 1 à 2, dans laquelle la zone de réception et la sortie du circuit de prélèvement (57) sont fixes par rapport à l'enceinte (49).

4. Machine selon l'une quelconque des revendications 1 à 3, dans laquelle la surface de réception de poudre du dispositif de dépôt de couches de poudre est montée mobile par rapport à la zone de fabrication (63).

5. Machine selon l'une quelconque des revendications 1 à 4, dans laquelle le circuit de prélèvement (57) comprend un raccord (65) configuré pour isoler par rapport à l'enceinte (49) le circuit de prélèvement (57) et un récipient (28) reçu dans la zone de réception (281) de sorte que la poudre s'écoule de manière étanche du circuit de prélèvement (57) vers le récipient (28).

6. Machine selon la revendication 5 dans lequel le raccord (65) est configuré pour coulisser le long d'un conduit définissant une sortie (573) du circuit de prélèvement (57) et entrer en contact avec des bords du récipient (28) reçu dans la zone de réception (281).

7. Machine selon l'une des revendications 5 ou 6 dans lequel le circuit de prélèvement (57) comprend un évent (67) configuré pour équilibrer une pression à l'intérieur du circuit de prélèvement (57) avec une pression à l'extérieur du circuit de prélèvement (57) lorsque le raccord (65) isole l'intérieur du circuit de prélèvement (57) et l'intérieur du récipient (28) par rapport à l'enceinte (49).

8. Machine selon l'une des revendications 1 à 7 comprenant un capteur (283) configuré pour détecter un niveau de remplissage en poudre d'un récipient (28) lorsque le récipient (28) est reçu dans la zone de réception (281).

9. Machine selon l'une des revendications 1 à 8 comprenant une canne d'aspiration (53) configurée pour aspirer de la poudre située dans la zone de réception (281) et de la poudre située dans la zone de fabrication (63).

10. Installation de fabrication additive comprenant une machine (4) selon l'une des revendications 1 à 9, le dispositif comprenant en outre un module de fourniture (2) de poudre configuré pour préparer, tamiser et conserver de la poudre, une sortie du module de fourniture (2) étant connectée à une entrée du circuit de transport (42).

11. Installation de fabrication additive selon la revendication 10, la machine de fabrication additive (4) étant conforme à la revendication 6, la canne d'aspiration (53) étant connectée à une entrée du module de fourniture (2).

12. Procédé de rempotage de poudre de fabrication dans une machine de fabrication additive comprenant une enceinte de fabrication (49), la machine étant configurée pour fabriquer un objet à partir de la poudre dans une zone fabrication (63) de l'enceinte (49), l'enceinte (49) étant équipée d'une boîte à gants avec des gants (251), les gants (251) étant configurés pour manipuler l'objet depuis l'extérieur de l'enceinte (49), le procédé comprenant les étapes, l'enceinte (49) étant fermée, consistant à :
- prélever (E64) de la poudre depuis un circuit de transport (42) de sorte à placer (E64) la poudre prélevée dans un récipient (28) reçu dans une zone de réception (281) de l'enceinte (49), la zone de réception (281) étant différente de la zone fabrication (63) et
- fermer (E65) le récipient (28) au moyen des gants (251) depuis l'extérieur de l'enceinte (49), le récipient (28) ne faisant pas partie de la machine et étant configuré pour être extrait de l'enceinte (49).

13. Procédé de rempotage de poudre selon la revendication 12, comprenant une étape (E63) antérieure à l'étape (E64) de prélèvement de la poudre, l'étape (E63) consistant à déplacer un raccord (65) pour isoler par rapport à l'enceinte (49) un circuit de prélèvement (57) de poudre et le récipient (28).

14. Procédé selon la revendication 12 ou 13 comprenant une étape de positionnement (E62) d'un capteur (283) configuré pour détecter un niveau de remplissage en poudre du récipient (28) de sorte à définir un niveau de remplissage du récipient.

15. Procédé de chargement de poudre de fabrication dans une machine de fabrication additive comprenant une enceinte de fabrication (49), la machine étant configurée pour fabriquer un objet à partir de la poudre dans une zone fabrication (63) de l'enceinte (49), l'enceinte (49) comprenant une boite à gants avec des gants (251), les gants (251) étant configurés pour manipuler l'objet depuis l'extérieur de la boîte, le procédé comprenant les étapes consistant à :
- (S2) insérer dans l'enceinte (49) un récipient (28) rempli de poudre et fermé hermétiquement, le récipient (28) étant reçu dans une zone de réception (281), la zone de réception (281) étant différente de la zone fabrication (63),
- (S3) fermer l'enceinte (49) de manière étanche,
- (S4) l'enceinte (49) étant fermée, ouvrir le récipient (28) au moyen des gants (251) depuis l'extérieur de l'enceinte (49) et
- (S6) l'enceinte (49) étant fermée, aspirer la poudre contenue dans le récipient (28) de sorte à la transférer vers un module de fourniture (2) de poudre configuré pour préparer, tamiser et conserver de la poudre.

## Patentansprüche

1. Maschine für die additive Fertigung (4), umfassend:
- einen abgeschlossenen Raum für die Fertigung (49), der konfiguriert ist, um dicht verschlossen zu sein, und der mit einer Handschuhbox mit Handschuhen (251) ausgestattet ist,
- eine Transportbahn (42) für Fertigungspulver zu einer Vorrichtung zum Abscheiden von Pulverschichten, wobei die Vorrichtung zum Abscheiden von Pulverschichten zum Auftragen des Pulvers auf einen Fertigungsbereich (63) in dem abgeschlossenen Raum für die Fertigung (49) konfiguriert ist, die Vorrichtung zum Abscheiden von Pulverschichten umfassend eine Pulveraufnahmeoberfläche und eine Pulverzufuhr, wobei die Pulverzufuhr oberhalb der Pulveraufnahmeoberfläche gelegen ist,
- eine Leistungsquelle, die zum selektiven Schmelzen des Fertigungspulvers, das in dem Fertigungsbereich (63) aufgetragen wird, konfiguriert ist, und
- eine Entnahmebahn (57), die zum Entnehmen des Pulvers von der Transportbahn (42) konfiguriert ist, und das entnommene Pulver zu einem Auslass der Entnahmebahn (57) zu transportieren, wobei der Auslass der Entnahmebahn oberhalb eines Aufnahmebereichs (281) angeordnet ist,
- der Auslass der Entnahmebahn (57) und der Aufnahmebereich (281) sich in dem abgeschlossenen Raum für die Fertigung befinden,
der Aufnahmebereich (281) sich von dem Fertigungsbereich (63) unterscheidet und gegenüber dem Auslass der Entnahmebahn (57) gelegen ist,
die Handschuhe (251), die zum Handhaben eines Objekts, das in dem abgeschlossenen Raum (49) gelegen ist, und zum Erreichen des Aufnahmebereichs (281), wenn der abgeschlossene Raum verschlossen ist, konfiguriert sind.

2. Maschine nach Anspruch 1, wobei die Entnahmebahn (57) zum Entnehmen des Pulvers von einem Teil der Transportbahn (42) konfiguriert ist, der außerhalb des abgeschlossenen Raums (49) gelegen ist.

3. Maschine nach einem der Ansprüche 1 bis 2, wobei der Aufnahmebereich und der Auslass der Entnahmebahn (57) gegenüber dem abgeschlossenen Raum (49) fest sind.

4. Maschine nach einem der Ansprüche 1 bis 3, wobei die Pulveraufnahmeoberfläche der Vorrichtung zum Abscheiden von Pulverschichten gegenüber dem Fertigungsbereich (63) beweglich montiert ist.

5. Maschine nach einem der Ansprüche 1 bis 4, wobei die Entnahmebahn (57) einen Anschluss (65) umfasst, der zum Isolieren, gegenüber dem abgeschlossenen Raum (49), der Entnahmebahn (57) und eines Behälters (28), der in dem Aufnahmebereich (281) aufgenommen ist, konfiguriert ist, sodass das Pulver abgedichtet von der Entnahmebahn (57) zu dem Behälter (28) fließt.

6. Maschine nach Anspruch 5, wobei der Anschluss (65) zum Gleiten entlang einer Leitung, die einen Auslass (573) der Entnahmebahn (57) definiert, und zum Inkontrakttreten mit den Rändern des Behälters (28), der in dem Aufnahmebereich (281) aufgenommen ist, konfiguriert ist.

7. Maschine nach einem der Ansprüche 5 oder 6, wobei die Entnahmebahn (57) eine Entlüftung (67) umfasst, die zum Ausgleichen eines Drucks im Inneren der Entnahmebahn (57) mit einem Druck außerhalb der Entnahmebahn (57) konfiguriert ist, wenn der Anschluss (65) das Innere der Entnahmebahn (57) und das Innere des Behälters (28) gegenüber dem abgeschlossenen Raum (49) isoliert.

8. Maschine nach einem der Ansprüche 1 bis 7, umfassend einen Sensor (283), der zum Erfassen eines Pulverfüllstand eines Behälters (28) konfiguriert ist, wenn der Behälter (28) in dem Aufnahmebereich (281) aufgenommen ist.

9. Maschine nach einem der Ansprüche 1 bis 8, umfassend ein Absaugrohr (53), das zum Absaugen des Pulvers, das in dem Aufnahmebereich (281) gelegen ist, und des Pulvers, das in dem Fertigungsbereich (63) gelegen ist, konfiguriert ist.

10. Anlage für die additive Fertigung, umfassend eine Maschine (4) nach einem der Ansprüche 1 bis 9, die Vorrichtung ferner umfassend ein Pulverbereitstellungsmodul (2), das zum Präparieren, Sieben und Aufbewahren des Pulvers konfiguriert ist, wobei ein Auslass des Bereitstellungsmoduls (2) mit einem Einlass der Transportbahn (42) verbunden ist.

11. Anlage für die additive Fertigung nach Anspruch 10, wobei die Maschine für die additive Fertigung (4) mit Anspruch 6 konform ist, wobei das Absaugrohr (53) mit einem Einlass des Bereitstellungsmoduls (2) verbunden ist.

12. Verfahren zum Umtopfen von Fertigungspulver in einer Maschine für die additive Fertigung, umfassend einen abgeschlossenen Raum für die Fertigung (49), wobei die Maschine zum Fertigen eines Gegenstands aus dem Pulver in einem Fertigungsbereich (63) des abgeschlossenen Raums (49) konfiguriert ist, wobei der abgeschlossene Raum (49) mit einer Handschuhbox mit Handschuhen (251) ausgestattet ist, wobei die Handschuhe (251) zum Handhaben des Gegenstand von außerhalb des abgeschlossenen Raums (49) konfiguriert sind, das Verfahren umfassend die Schritte, wobei der abgeschlossene Raum (49) verschlossen ist, bestehend aus:
- Entnehmen (E64) von Pulver von einer Transportbahn (42), zum Platzieren (E64) des entnommenen Pulvers in einem Behälter (28), der in einem Aufnahmebereich (281) des abgeschlossenen Raums (49) aufgenommen ist, wobei sich der Aufnahmebereich (281) von dem Fertigungsbereich (63) unterscheidet und
- Verschließen (E65) des Behälters (28) mittels der Handschuhe (251) von außerhalb des abgeschlossenen Raums (49), wobei der Behälter (28) nicht Teil der Maschine ist und konfiguriert ist, um aus der Kammer (49) entnommen zu werden.

13. Verfahren zum Umtopfen von Pulver nach Anspruch 12, umfassend einen Schritt (E63) vor dem Schritt (E64) der Entnahme des Pulvers, wobei der Schritt (E63) darin besteht, einen Anschluss (65) zu verschieben, zum Isolieren, gegenüber dem abgeschlossenen Raum (49), einer Entnahmebahn (57) für Pulver und des Behälters (28).

14. Verfahren nach Anspruch 12 oder 13, umfassend einen Schritt des Positionierens (E62) eines Sensors (283), der zum Erfassen eines Pulverfüllstands des Behälters (28) konfiguriert ist, um einen Füllstand des Behälters zu definieren.

15. Verfahren zum Laden von Fertigungspulver in eine Maschine für die additive Fertigung, umfassend einen abgeschlossenen Raum für die Fertigung (49), wobei die Maschine zum Fertigen eines Gegenstands aus dem Pulver in einem Fertigungsbereich (63) des abgeschlossenen Raums (49) konfiguriert ist, der abgeschlossene Raum (49) umfassend eine Handschuhbox mit Handschuhen (251), wobei die Handschuhe (251) zum Handhaben des Gegenstand von außerhalb der Box konfiguriert sind, das Verfahren umfassend die Schritte, bestehend aus:
- (S2) Einfügen, in den abgeschlossenen Raum (49), eines Behälters (28), der mit Pulver gefüllt und hermetisch verschlossen ist, wobei der Behälter (28) in einem Aufnahmebereich (281) aufgenommen wird, wobei sich der Aufnahmebereich (281) von dem Fertigungsbereich (63) unterscheidet,
- (S3) dichtes Verschließen des abgeschlossenen Raums (49),
- (S4) wenn der abgeschlossene Raum (49) verschlossen ist, Öffnen des Behälters (28) mittels der Handschuhe (251) von außerhalb des abgeschlossenen Raums (49) und
- (S6) wenn der abgeschlossene Raum (49) verschlossen ist, Absaugen des Pulvers, das in dem Behälter (28) enthalten ist, um es zu einem Pulverbereitstellungsmodul (2) zu überführen, das zum Präparieren, Sieben und Aufbewahren des Pulvers konfiguriert ist.

## Claims

1. Additive manufacturing machine (4) comprising:
- a manufacturing chamber (49) designed to be sealingly closed, and equipped with a glove box having gloves (251),
- a conveying circuit (42) for conveying manufacturing powder to a powder layer depositing device, the powder layer depositing device being designed to spread the powder over a manufacturing area (63) in the manufacturing chamber (49), the powder layer depositing device comprising a powder receiving surface and a powder inlet, the powder inlet being located above the powder receiving surface,
- a power source designed to selectively melt the manufacturing powder spread in the manufacturing area (63), and
- a collecting circuit (57) designed to collect the powder from the conveying circuit (42) and to convey the collected powder to an outlet of the collecting circuit (57), the outlet of the collecting circuit being located above a receiving area (281),
- the outlet of the collecting circuit (57) and the receiving area (281) being located in the manufacturing chamber,
the receiving area (281) being different from the manufacturing area (63) and being located opposite the outlet of the collecting circuit (57),
the gloves (251) being designed to handle an object located in the chamber (49) and to reach the receiving area (281) when the chamber is closed.

2. Machine according to claim 1, wherein the collecting circuit (57) is designed to collect the powder from a part of the conveying circuit (42) located outside the chamber (49).

3. Machine according to either of claims 1 or 2, wherein the receiving area and the outlet of the collecting circuit (57) are fixed with respect to the chamber (49).

4. Machine according to any of claims 1 to 3, wherein the powder receiving surface of the powder layer depositing device is movably mounted with respect to the manufacturing area (63).

5. Machine according to any of claims 1 to 4, wherein the collecting circuit (57) comprises a coupling (65), designed to isolate the collecting circuit (57) and a container (28) received in the receiving area (281) with respect to the chamber (49) so that the powder flows in a sealed manner from the collecting circuit (57) to the container (28).

6. Machine according to claim 5, wherein the coupling (65) is designed to slide along a duct defining an outlet (573) of the collecting circuit (57) and to contact edges of the container (28) received in the receiving area (281).

7. Machine according to either of claims 5 or 6, wherein the collecting circuit (57) comprises a vent (67) designed to equalize a pressure inside the collecting circuit (57) with a pressure outside the collecting circuit (57) when the coupling (65) isolates the inside of the collecting circuit (57) and the inside of the container (28) with respect to the chamber (49).

8. Machine according to any of claims 1 to 7, comprising a sensor (283) designed to detect a powder fill level of a container (28) when the container (28) is received in the receiving area (281).

9. Machine according to any of claims 1 to 8, comprising a suction tube (53) designed to suck up the powder located in the receiving area (281) and the powder located in the manufacturing area (63).

10. Additive manufacturing apparatus comprising a machine (4) according to any of claims 1 to 9, the device further comprising a powder supply module (2) designed for preparing, sieving and storing the powder, an outlet of the supply module (2) being connected to an inlet of the conveying circuit (42).

11. Additive manufacturing apparatus according to claim 10, the additive manufacturing machine (4) being in accordance with claim 6, the suction pipe (53) being connected to an inlet of the supply module (2).

12. Method for repotting manufacturing powder in an additive manufacturing machine comprising a manufacturing chamber (49), the machine being designed to manufacture an object from the powder in a manufacturing area (63) of the chamber (49), the chamber (49) being equipped with a glove box having gloves (251), the gloves (251) being designed to handle the object from outside the chamber (49), the method comprising the steps, when the chamber (49) is closed, of:
- collecting (E64) the powder from a conveying circuit (42) so as to place (E64) the collected powder in a container (28) received in a receiving area (281) of the chamber (49), the receiving area (281) being different from the manufacturing area (63) and
- closing (E65) the container (28) by means of the gloves (251) from outside the chamber (49), the container (28) not being part of the machine and being designed for removal from the chamber (49).

13. Method for repotting powder according to claim 12, comprising a step (E63) prior to the powder collecting step (E64), the step (E63) consisting in moving a coupling (65) to isolate a powder collecting circuit (57) and the container (28) with respect to the chamber (49).

14. Method according to claim 12 or 13 comprising a step of positioning (E62) a sensor (283) designed to detect a powder fill level of the container (28) so as to define a fill level of the container.

15. Method for loading manufacturing powder into an additive manufacturing machine comprising a manufacturing chamber (49), the machine being designed to manufacture an object from the powder in a manufacturing area (63) of the chamber (49), the chamber (49) comprising a glove box having gloves (251), the gloves (251) being designed to handle the object from outside the box, the method comprising the steps of:
- (S2) inserting a hermetically closed, powder-filled container (28) into the chamber (49), the container (28) being received in a receiving area (281), the receiving area (281) being different from the manufacturing area (63),
- (S3) sealingly closing the chamber (49),
- (S4) when the chamber (49) is closed, opening the container (28) by means of the gloves (251) from outside the chamber (49) and
- (S6) when the chamber (49) is closed, sucking up the powder contained in the container (28) so as to transfer the powder to a powder supply module (2) designed for preparing, sieving and storing the powder.
